Europäisches Patentamt

European Patent Office

Office européen des brevets

(19)

(11) Veröffentlichungsnummer: **0 189 116**
**B1**

(12) **EUROPÄISCHE PATENTSCHRIFT**

(45) Veröffentlichungstag der Patentschrift: **18.07.90**

(51) Int. Cl.⁵: **H 02 K 15/06**

(21) Anmeldenummer: **86100490.1**

(22) Anmeldetag: **16.01.86**

(54) **Spuleneinbringleiste für Statoren elektrischer Maschinen.**

(30) Priorität: **22.01.85 DE 3501879**

(43) Veröffentlichungstag der Anmeldung:
**30.07.86 Patentblatt 86/31**

(45) Bekanntmachung des Hinweises auf die
Patenterteilung:
**18.07.90 Patentblatt 90/29**

(84) Benannte Vertragsstaaten:
**AT BE CH DE FR GB IT LI LU NL SE**

(56) Entgegenhaltungen:
**EP-A-0 154 912**
**DE-A-2 443 380**
**DE-B-2 658 891**

(73) Patentinhaber: **Veser, Franz**
**Kanalstrasse 16**
**D-7980 Ravensburg (DE)**

(72) Erfinder: **Veser, Franz**
**Kanalstrasse 16**
**D-7980 Ravensburg (DE)**

(74) Vertreter: **Patentanwälte Dipl.-Ing. E. Eisele**
**Dr.-Ing. H. Otten**
**Seestrasse 42**
**D-7980 Ravensburg (DE)**

## Beschreibung

Die Erfindung betrifft eine Spuleneinbringleiste, welche in die Statornuten elektrischer Maschinen axial verschiebbar eingesetzt wird und welche zur Aufnahme eines Spulenstranges zwei elastisch spreizbare, am Leistenfußteil miteinander verbundene Zungen aus Kunststoff besitzt, die mit Führungslamellen zur Führung der Leiste in der Statornut versehen sind.

Eine Spuleneinbringleiste dieser Art ist aus dem deutschen Patent 26 58 891 bekannt. Die beiden Leistenzungen sind am Leistenfußteil fest miteinander verbunden. Sie sind geradlinig ausgeführt und spreizen sich im Ruhezustand ähnlich einer Pinzette auf. Wenn jedoch die Leiste mit dem Fußteil voraus ein Stück weit in eine Statornut eingesteckt ist, legen sich die Zungen auch mit ihren Spitzen aneinander. Man muß deshalb die Zungenspitzen auseinander ziehen und die Leiste auf diese Weise spreizen, um einen Spulenstrang einführen zu können. Bisher wurden die Einziehleisten regelmäßig aus Stahl hergestellt, wobei die dünnen, aus besonders elastischem Federblech hergestellten Führungslamellen an den Zungen angenietet waren. Aus der genannten Schrift ist es jedoch auch bekannt, die Leisten aus Kunststoff herzustellen, wobei die Führungslamellen in die Zungen eingegossen sind.

Bei einem aus dem deutschen Patent 34 09 684 bekannten Einziehwerkzeug werden insoweit gleich geformte Einbringleisten benutzt. Das Problem des Aufspreizens der Zungen wird dadurch zu lösen versucht, daß man vor dem Einlegen der Spulen in einem eigenen Arbeitsgang die Zungenspitzen benachbarter Einbringleisten paarweise aneinanderlegt und kleine elastische Hauben darüberstülpt. Im übrigen wird bei diesen Einbringleisten der Leistenfuß mit einem kraftbetätigten Ziehwerkzeug formschlüssig verbunden. Die Ziehwerkzeuge und damit auch die Einbringleisten müssen jedoch auf den Statorinnendurchmesser genau abgestimmt sein. Es ist deshalb ein beträchtlicher Vorrat an Einziehwerkzeugen und Einbringleisten erforderlich, um nur die gängigsten Statorgrößen bearbeiten zu können.

Der Erfindung liegt die Aufgabe zugrunde, eine Spuleneinbringleiste vorzuschlagen, in welche sich die Spulenstränge leichter einfädeln lassen, insbesondere beim Arbeiten mit zusammengeschalteten Spulensätzen, deren Einzelspulen gleichzeitig in den Stator eingebracht werden sollen.

Es ist allgemein das Ziel der Erfindung, das Einbringen von Spulen in Statoren elektrischer Maschinen mit Hilfe von Einbringleisten rationell zu gestalten. Es sollen Einbringleisten geschaffen werden, die ein geringes Gewicht haben, sich leicht handhaben lassen und vielfach verwendbar sind. Dadurch soll der Aufwand für die Vorratshaltung und für den Ersatz beschädigter Leisten insbesondere bei Reparaturbetrieben geringgehalten werden.

Es ist ferner ein Ziel der Erfindung, mit besonderen Mitteln zu verhindern, daß beim Einfädeln der Spulenstränge einzelne Drähte zwischen zwei benachbarte Einziehleisten kommen. Auch soll eine. Möglichkeit geschaffen werden, sogenannte Deckleisten, welche den schon in der Statornut befindlichen Spulenstrang gegenüber dem Nutenschlitz abdecken, gleichzeitig mit dem Spulenstrang einbringen zu können.

Ein anderes Ziel der Erfindung besteht darin, die Führungslamellen besonders zuverlässig mit den Leistenzungen zu verbinden, so daß die Einbringleisten eine lange Lebensdauer haben und die lackisolierten Wickeldrähte beim Einziehen nicht beschädigt werden.

Es ist auch Ziel der Erfindung, für den Fall der Serienherstellung von Elektromotoren gleicher Größe ein Werkzeug mit besonders kurzen Einbringleisten zu schaffen.

Im Gegensatz zu der bekannten formschlüssigen Verbindung zwischen Einbringleiste und Ziehwerkzeug möchte die Erfindung eine kraftschlüssige Verbindung möglich machen, bei der das Ziehwerkzeug an die Einbringleisten angesetzt wird, nachdem diese mit ihren Fußteilen bereits ein Stück weit in die Statornuten eingesteckt worden sind. Dabei ist beabsichtigt, nicht nur die axiale Zugkraft, sondern auch eine radiale Kraftkomponente auf die Einbringleisten wirken zu lassen, so daß diese auf die Statorzähne gedrückt werden.

Die Erfindung will auch möglich machen, einen Adapter zu schaffen, mit dem es möglich ist, an sich zur formschlüssigen Verbindung mit dem Ziehwerkzeug eingerichtete Einbringleisten kraftschlüssig an ein einfaches Ziehwerkzeug zu koppeln.

Auch soll es möglich sein, mehrere in nebeneinanderliegende Statornuten eingesetzte Einbringleisten in Querrichtung miteinander lösbar zu verbinden, um das Einbringen von Spulengruppen zu erleichtern.

Es ist auch Ziel der Erfindung, Maßnahmen vorzusehen, welche das Einfügen der Einbringleisten in die Statornuten erleichtern und den Leisten beim Durchziehen eine bessere Führung geben.

Bei einer Ausführungsform soll das Ziehwerkzeug, welches die Einbringleisten bewegt, mit Hilfswerkzeugen ausgestattet werden, die das geordnete Einbringen der Spulen erleichtern und sich für möglichst viele unterschiedliche Statorinnendurchmesser eignen.

Es ist ein umfassendes Ziel der Erfindung, Wickelhilfsgeräte vorzuschlagen, die sich besonders zur Verwendung in Kleinbetrieben und kleineren Elektromotoren-Reparaturwerkstätten eignen. Diese Betriebe sind dadurch belastet, daß viele zur Reparatur angelieferte Statoren Sonderausführungen mit unüblichen Abmessungen sind. Dieses bedingt besonders hohe Aufwendungen für die Änderung und Anpassung sowie für die Vorratshaltung der Einziehwerkzeuge.

Ausgehend von einer Spuleneinbringleiste der einleitend bezeichneten Art wird die Aufgabe der Erfindung dadurch gelöst, daß die Zungen im Spritzdruck- oder Preßverfahren aus einem Elastomer hergestellt und derart geformt sind, daß die Einbringleiste anschließend an den Fußteil einen Bereich aufweist, in dem die Zungen mit Abstand parallel zueinander verlaufen, und daß sie anschließend an diesen Bereich eine Spuleneinführzone mit bei zunehmender Entfernung vom Fußteil zunehmendem Zungenabstand bildet, deren Länge mindestens der Breite des flachliegenden Spulenstranges entspricht und deren Spreizwinkel so bemessen ist, daß die Zungenspitzen der in den Stator eingesetzten benachbarten Leisten aneinanderliegen. Durch diese Form der Leisten wird erreicht, daß die Zungen auch dann aufgespreizt sind, wenn die Leisten teilweise in die Statornuten eingesteckt sind. Es ergeben sich ausgeprägte V-förmige Spuleneinführzonen, in welche die Spulenstränge ohne weiteres fehlerlos eingefügt werden können. Damit die Zungenspitzen benachbarter Einbringleisten genau aneinanderliegen, wird vorgeschlagen, daß je eine Leistenzunge mit einem seitlich abstehenden Querzapfen versehen ist und die andere Leistenzunge an dieser Stelle eine Aufnahmebohrung für den Querzapfen besitzt. Es ist möglich, an den Querzapfen einen Deckschieber-Mitnehmer anzuhängen, weshalb die Querzapfen für diese. Zugbelastung ausreichend bemessen sein sollten. Außerdem dienen die Querzapfen als Sperre, falls trotzdem versehentlich ein Spulendraht zwischen die Einbringleisten gerät.

Die Leistenzungen werden vorzugsweise als Einzelteile gefertigt und am Fußteil durch zerstörungsfrei lösbare, vorzugsweise druckknopfartige Mittel miteinander verbunden. Dies vereinfacht die Herstellung und verringert die Kosten für den Ersatz beschädigter Einbringleisten, da die Zungen einzeln ersetzt werden können. Besonders haltbare Leistenzungen ergeben sich, wenn die Führungslamelle bezogen auf den Querschnitt schräg durch den Zungenkörper verläuft, derart, daß die Lamellenteile, welche die Zahnkanten des Stators umgreifen, an den unteren, einander benachbarten Kanten der Zungen aus dem Kunststoff heraustreten. Durch diese Form werden die Wickeldrähte besonders geschont. Die Führungslamellen können aber auch mit den Leistenzungen durch Klebemittel verbunden sein, wobei der obere Rand der Lamellen eingelassen und mit der Zungenoberfläche bündig ist.

Um ein besonders handliches Einziehwerkzeug für Fertigungsbetriebe zu schaffen, wird vorgeschlagen, daß mehrere Einbringleisten zusammen einen einstückigen Einbringkörper bilden. Diese Einbringleisten sind sozusagen an den Fußteilen zusammengewachsen und können dadurch als Einheit leicht mit einem entsprechend bemessenen Zugbügel verschraubt werden. Bei einzelnen Einbringleisten ist hingegen vorgesehen, daß der Leistenfuß geeignete Strukturen, z.B. Ausnehmungen, besitzt, um ihn mit einem Einbringwerkzeug formschlüssig zu verbinden.

Davon ausgehend wird zur weiteren Verbesserung des Erfindungsgegenstandes vorgeschlagen, daß der Fußteil der Einbringleiste auf der den Führungslamellen gegenüberliegenden Oberseite mit einer Schubfläche versehen ist, auf welche beim Einziehen der Spulen die Kraft einer auf dem Zugschaft der Ziehvorrichtung angeordneten Schubscheibe übertragen wird. Eine derartige kraftschlüssige Kupplung der Einbringleisten mit der Ziehvorrichtung ist leichter zu handhaben. Die Gestaltung des Fußteils ändert sich im wesentlichen dadurch, daß dieses gegenüber der Zungenoberkante nach oben vorspringt. Eine weitere sehr wesentliche Verbesserung besteht darin, daß die genannte Schubfläche schräg zur Schubkraft verläuft, derart, daß beim Einziehvorgang eine Kraftkomponente an der Schubfläche entsteht, welche den Fußteil in die Statornut eindrückt.

Zur nachträglichen Ausstattung schon vorhandener Einbringleisten alter Art, deren Fußteil eine Ausnehmung besitzt, wird ein mit einer Schubfläche versehener einstückiger Aufnahmebügel aus Kunststoff vorgeschlagen, welcher auf den Fußteil aufsetzbar ist und diesen umfaßt und in Zugrichtung festhält. Insbesondere kann der Aufnahmebügel seitlich auf das Fußteil aufgeschoben werden, wobei ein Nocken in die Ausnehmung des Fußteils einrastet.

Um mehrere Einbringleisten im Fußteilbereich wahlweise miteinander in Querrichtung verbinden zu können, ist der Fußteil oder der Aufnahmebügel mit einer Querbohrung versehen. In diese kann ein verbindender Gewindeschaft eingesteckt werden.

Schließlich besteht eine zweckmäßige Weiterbildung der beschriebenen Einbringleiste darin, daß am Fußteil oder an dem Aufnahmebügel eine Führungsrippe angeformt ist, die mit den Führungslamellen fluchtet, Dadurch wird das Einstecken der Fußteile in den Spalt zwischen den Statorzähnen wesentlich erleichtert.

Weitere Einzelheiten der Erfindung sind anhand der Zeichnung erläutert, in welcher Ausführungsbeispiele der Erfindung dargestellt sind. Es zeigen

Fig. 1 die Seitenansicht der in den Stator eingesetzten Einbringleiste,

Fig. 2 die Draufsicht auf zwei Leisten, welche in einen Statorausschnitt eingesetzt sind,

Fig. 3 den vergrößerten Querschnitt III-III aus Fig. 2,

Fig. 4 die Seitenansicht eines Einbringkörpers,

Fig. 5 die Draufsicht auf Fig. 4 mit gruppierten Einziehleisten und einem Deckschieber-Mitnehmer,

Fig. 6 den Schnitt VI-VI aus Fig. 5,

Fig. 7 die Seitenansicht des Fußteils einer anderen Einbringleiste in größerem Maßstab,

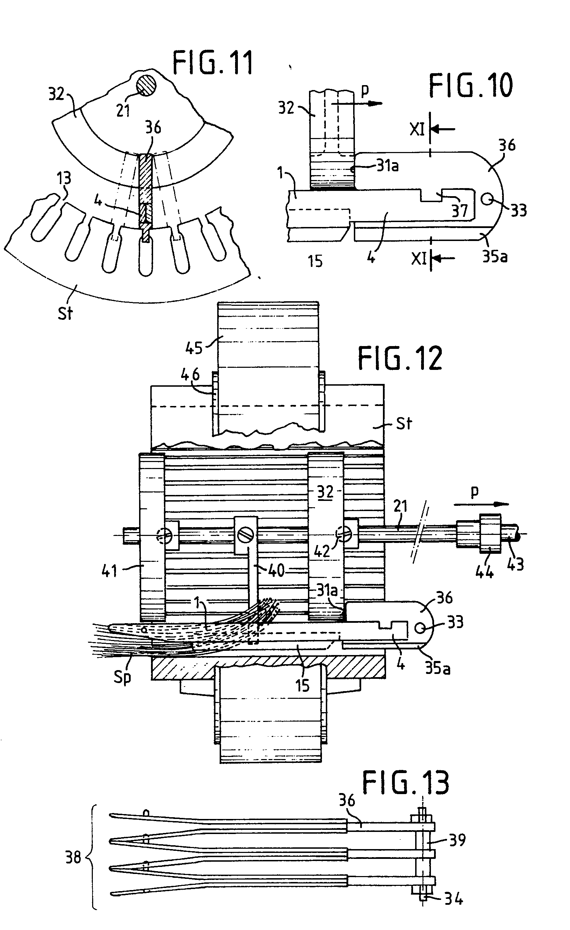

Fig, 8 einen Querschnitt VIII-VIII des Fußteils nach Fig. 7,

Fig. 9 die Einbringleiste nach Fig. 7 von oben gesehen,

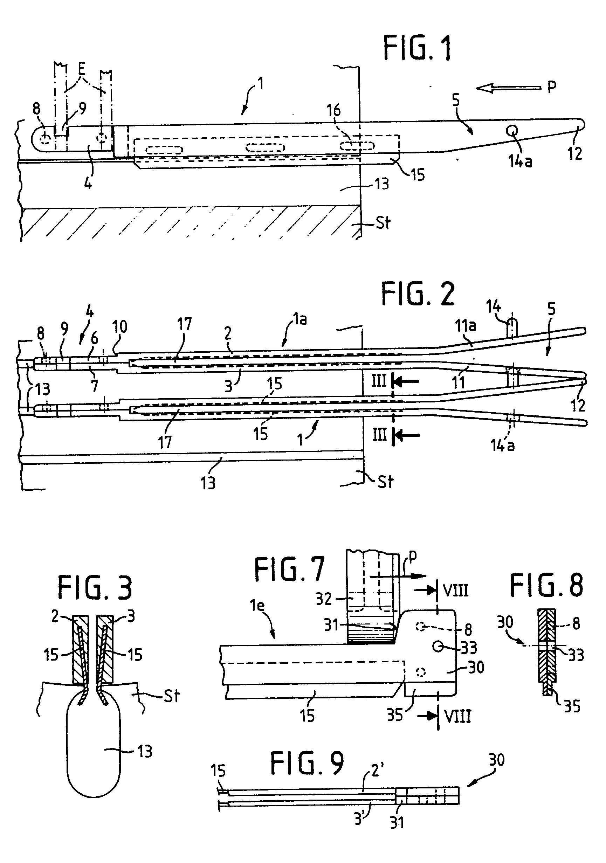

Fig. 10 die Seitenansicht des Fußteils einer Einbringleiste gemäß Fig. 1 mit einem Aufnahmebügel,

Fig. 11 einen Querschnitt XI-XI mit zusätzlicher Darstellung eines Stators,

Fig. 12 den Axialschnitt eines Stators mit einem Einziehwerkzeug und einer Einbringleiste gemäß Fig. 10 und,

Fig. 13 die Draufsicht auf eine Dreiergruppe von Einbringleisten gemäß Fig, 12.

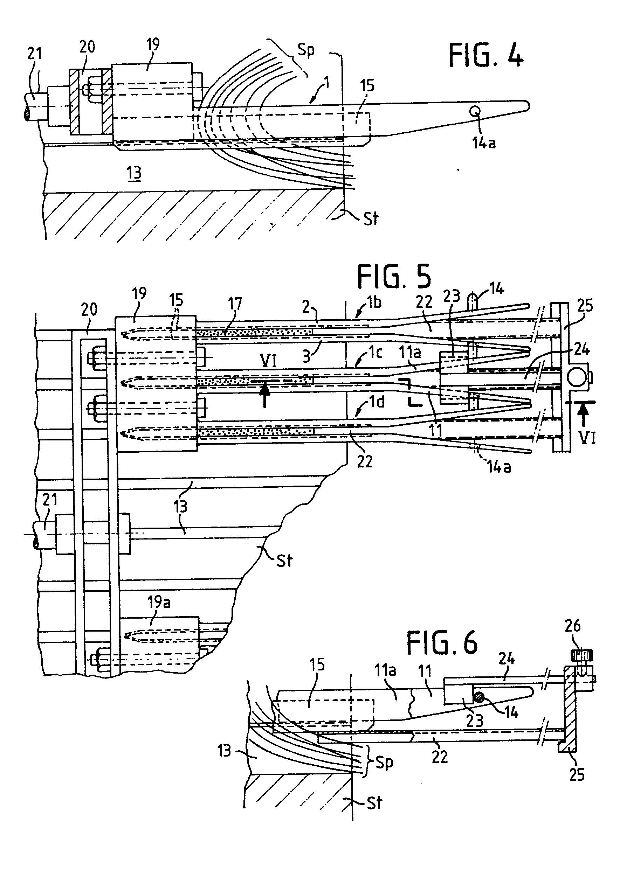

Die in den Figuren 2 und 5 gezeigten Statorausschnitte sind in die Horizontalebene gestreckt.

Die Einbringleiste 1 nach Fig, 1, 2 und 3 besteht aus zwei Zungen 2 und 3, an welche einerseits ein Fußteil 4 und andererseits eine Spuleneinführzone 5 angeformt sind. Der Fußteil wird durch zwei aneinandergelegte Zungenfortsätze 6 und 7 gebildet, welche durch die angeformten Druckknöpfe 8 lösbar miteinander verbunden sind. Zum formschlüssigen Verbinden der Leiste 1 mit einem Einbringwerkzeug E ist der Fußteil 4 mit einer Ausnehmung 9 und einer Absetzkante 10 versehen. Die Einführzone 5 ist ein Spreizraum, welcher durch die angeformte Abwinkelung der Zungenkopfteile 11, 11a entsteht, wobei der Spreizwinkel so bemessen ist, daß die Zungenspitzen 12 der in die Statornuten 13 eingesetzten benachbarten Einbringleisten 1, 1a aneinander liegen.

In der Einführzone 5 sind die Zungenkopfteile 11 bzw. 11a mit einem seitlich abstehenden Querzapfen 14 bzw. einer Aufnahmebohrung 14a für diesen Zapfen versehen. Außerdem verlaufen die Zungenkopfteile 11, 11a konisch nach vorne.

Die Führungslamellen 15 sind in die Zungen 2, 3 eingebettet. Im vorliegenden Ausführungsbeispiel bestehen die Lamellen aus dünnen elastischen Stahlblechstreifen und sind gemäß Fig. 3 in die Zunge bei deren Herstellung im Spritzdruckverfahren in den Kunststoff eingeformt. Um dabei eine innige formschlüssige Verbindung zwischen diesen Teilen herzustellen, sind die Lamellen mit Durchbrechungen 16 versehen. Außerdem verlaufen die Lamellen 15 schräg durch die Zungen (Fig. 3) derart, daß der gegenseitige Abstand der aus den Zungen heraustretenden Lamellenteile der Nutenshlitzbreite entspricht, so daß ein stufenfreier Übergang für das Einsetzen der Spulen vorhanden ist. Die unteren Randabschnitte der Führungslamellen 15 sind hörnerartig aufgebogen, damit sie sich an den Zahnflanken halten können.

Die Leistenfußteile 4 sind innen so abgesetzt, daß ein geschlossener Aufnahmeraum 17 für den flachliegenden Spulenstrang Sp gebildet wird, so daß dieser soweit nach innen ohne Verklemmung eingeschoben werden kann, daß er sich bei Beginn des Einziehvorganges schon im Anfangsteil der Statornut 13 befindet, wodurch sich das Einziehen wesentlich beschleunigen läßt. Außerdem gibt es nach dem Einziehen beim Herausnehmen der Leiste keine Hemmungen durch verklemmte Drähte.

Um mit den erfindungsgemäßen Einbringleisten die Spulen Sp in den Stator St einzubringen, bzw. einzuziehen, werden die an ein Einziehwerkzeug E angeschlossenen Einbringleisten mit ihren Führungslamellen 15 zunächst soweit in die Statornuten 13 eingeschoben, daß eine sichere Führungswirkung der mit leichter Querspannung von den Nuten erfaßten Lamellen 15 gewährleistet ist.

Anschließend werden die Spulenstränge Sp in Pfeilrichtung P (Fig. 1) in die Einführzone 5 geschoben und bis zum Ende des Aufnahmeraumes 17 eingedrückt, wobei das sichere Einfädeln der Spulen durch die geschlossenen Zungenspitzen 12 auch bei sehr dünnen Drähten gewährleistet ist. Außerdem kann durch die symmetrisch zur Nutenachse gespreizte Einführzone 5 die Einführrichtung der Deckschieber 22 (Fig. 5, 6), mühelos anvisiert werden, wodurch das Einstecken der Deckschieber 22 gegenüber bisher wesentlich erleichtert ist. Die Querzapfen 14 werden durch die beim Spuleneinsetzen entstehende zusätzliche Zungenspreizung in die Bohrungen 14a eingeschoben und versperren den Durchgang zwischen den Leisten 1, 1a, so daß auch das weitere, sehr störende Vordringen von verirrten Drähten zwischen den Leisten gestoppt werden kann.

Die konische Ausbildung der Zungen in der Einführzone 5 erleichtert das Ansetzen der Spulen bei mehreren nebeneinander eingesetzten Einbringleisten.

Die Figuren 4, 5 und 6 zeigen ein Beispiel für die weitere Ausgestaltung der erfindungsgemäßen Einbringleiste aus Kunststoff, welche inbesondere für große und sehr kleine Statordurchmesser geeignet ist.

Das Einziehwerkzeug besteht hierbei aus einem Einbringkörper 19, 19a aus Kunststoff, an welchem die Einziehleisten 1b, 1c, 1d einstückig angeformt sind. Die Führungslamellen 15 sind in den Körper 19 und in die Leistenzungen eingebettet. Die übrigen Merkmale der Figuren 4 und 5 entsprechen sinngemäß denjenigen nach den Figuren 1 bis 3.

Der Einbringkörper 19 ist z.B. für die Aufnahme einer Gruppe von drei Leisten 1b, 1c, 1d für das Einziehen von zusammengeschalteten Spulengruppen einer vierpoligen Statorwicklung ausgelegt, wobei von der zweiten Gruppe noch der Einbringkörper 19a angedeutet ist. Zum kompletten Einziehen dieser mit den Spulensätzen belegten Leistengruppen können die Einbringkörper 19, 19a zu einer Einzieheinheit zusammengefaßt und an einem gemeinsamen Zugbügel 20 befestigt werden. Dieser ist über einen Zugschaft 21 mit einer steuerbaren Ziehvorrichtung verbunden, so daß die gesamte Einzieheinheit in einem einzigen Arbeitsschritt durch den Stator gezogen werden kann, wobei gleichzeitig auch die angesetzten Deckschieber 22 in die Nuten 13 gebracht werden.

Nach Fig. 5 und 6 dient dazu ein Mitnehmer 23, der beim Spuleneinziehen von den Querzapfen 14 mitgezogen wird, wobei die Zugkraft über ein Zugelement 24 auf eine Schiebeplatte 25 übertragen wird, an welcher die zwischen die Führungslamellen 15 eingesetzten Deckschieber 22 anstehen, so daß sie mit den Einbringleisten in die Nuten 13 eingedrückt werden. Zur Anpassung an die jeweilige Länge der Deckschieber 22 ist das Zugelement 24 z.B. durch eine Stellschraube 26 längenverstellbar mit der Schiebeplatte 25 verbunden.

Der in den Figuren 7 bis 9 dargestellte Fußteil 30 einer Einbringleiste le springt nach oben vor. Durch diesen Vorsprung ergibt sich eine schräge Schubfläche 31, welche zur Übertragung der von einer Schubscheibe 32 ausgehenden Schubkraft p auf die Einbringleiste ledient. Auch hier besteht, wie Fig. 8 zeigt, der Fußteil 30 aus zwei Hälften, die durch Druckknöpfe 8 miteinander verbunden und jeweils einstückig an die zugehörigen Zungen 2' und 3' angeformt sind. Eine Querbohrung 33 im Fußteil 30 dient zum Einfügen eines Gewindeschaftes 34, wie er in Fig. 13 dargestellt ist. In Fortsetzung der Führungslamellen 15 verläuft eine Führungsrippe 35 an dem Fußteil 30, welche das Einführen der Einbringleiste in die Statornut 13 erleichtert. Die Schräglage der Schubfläche 31 bewirkt, daß eine Komponente der Schubkraft p entsteht, welche den Fußteil 30 beim Einbringvorgang in die Statornut drückt.

Die Figuren 10 und 11 betreffen die nachträgliche Ausrüstung der in Fig. 1 dargestellten Einbringleiste 1 mit einem Aufnahmebügel 36 als Vorrichtung zur Übertragung der Schubkraft p auf die Einbringleiste 1. Der einstückig herstellbare Aufnahmebügel 36 besteht aus einem zähen elastischen Kunststoff und kann von der Seite her auf den Fußteil 4 aufgesetzt werden. Dabei umfaßt der Aufnahmebügel den Fußteil 4, wobei ein Nocken 37 in die Ausnehmung 9 des Fußteils einrastet. Dadurch wird die von der Schubscheibe 32 auf die in diesem Beispiel rechtwinklig verlaufende Schubfläche 31a übertragene Schubkraft p an den Fußteil 4 weiter übertragen. Auch hier erleichtert eine Führungsrippe 35a das Einsetzen des Aufnahmebügels 36 in die Statornut 13. Die Abmessungen des Aufnahmebügels 36 sind auf den Fußteil 4 so abgestimmt, daß der elastische Werkstoff des Aufnahmebügels eine ausreichende Spannkraft erzeugt, um ihn am Fußteil festzuhalten.

Fig. 12 zeigt einen längs aufgeschnittenen Stator St mit dem darin enthaltenen Einbringwerkzeug und einer Einbringleiste gemäß Fig. 10 während des Einbringvorganges. Der Deutlichkeit wegen ist nur eine einzige Einbringleiste 1 gezeigt, welche mit einem Aufnahmebügel 36 versehen ist, wobei die Spule Sp schon teilweise in eine Nut 13 eingebracht ist. An sich ist jedoch davon auszugehen, daß für das Bestücken des Stators die Spulen gruppenweise eingezogen werden. Wie in Fig. 13 dargestellt ist, kann das dem Wickelprogramm entsprechende Ordnen der Spulengruppen dadurch vereinfacht werden, daß mehrere Einbringleisten entsprechend der Nutenteilung zu einer Gruppe 38 zusammengefaßt und miteinander verbunden werden. Diese ganze Leistengruppe 38 wird gemeinsam in den Stator eingeschoben. Die gegenseitige Verbindung erfolgt mittels des schon erwähnten Gewindeschaftes 34 und durch Einfügen von Distanzstükken 39. Der Gewindeschaft durchsetzt die Löcher 33 der Aufnahmebügel 36. Auch nach dem Zusammenschrauben können die Einbringleisten 1 einzeln ausgewechselt werden.

Je nach Statorlänge geordnet, werden dann die Schubscheibe 32, ein Mitnehmerdorn 40 und eine Niederhaltescheibe 41 auf dem Zugschaft 21 durch Stellschrauben 42 befestigt. Die Schubscheibe 32 liegt an der Schubfläche 31a an und der Mitnehmerdorn 40 erfaßt die Spulenstränge im Bereich des Spulenkopfes. Die Niederhaltescheibe 41 verhindert ein Ausweichen der Spulenstränge aus der Einziehlage.

Nachdem die Werkzeugteile in der beschriebenen Weise auf dem Zugschaft 21 angeordnet sind, wird dieser mit der Kolbenstange 43 eines Hubkolbens über eine formschlüssige Kupplung 44 verbunden und der Einziehvorgang eingeleitet.

Der Stator St ist in einem bekannten, um die Statorachse drehbaren Einspannring 45 befestigt, dessen Innenring 46 für das Einziehen der nächstfolgenden Phase jeweils so weiter gedreht und fixiert wird, daß die zu bestückenden Statornuten im unteren Statorbereich etwa symmetrisch zur Mittelachse liegen. Da bei jedem Einziehschritt nur eine einzige Spulengruppe eingezogen wird, kann die Achse des Zugschaftes 21 exzentrisch zur Statorachse verlaufen, weshalb die Hilfswerkzeuge 32, 40 und 41 für verschiedene Statordurchmesser und Nutenteilungen unverändert verwendbar sind.

1a Einbringleiste.
1b Einbringleiste.
1c Einbringleiste.
1d Einbringleiste.
1e Einbringleiste.
2 Zunge.
2' Zunge.
3 Zunge.
3' Zunge.
4 Fußteil.
5 Einführzone.
6 Zungenfortsatz.
7 Zungenfortsatz.
8 Druckknöpfe.
9 Ausnehmung.
10 Absetzkante.
11 Zungenkopfteile.
11a Zungenkopfteil.
12 Zungenspitzen.
13 Statornut.
14 Querzapfen.
14a Bohrung.
15 Führungslamelle.
16 Durchbrechungen.
17 Aufnahmeraum.
19 Einbringkörper.
19a Einbringkörper.
20 Zugbügel.
21 Zugschaft.
22 Deckschieber.
23 Mitnehmer.
24 Zugelement.
25 Schiebeplatte.
26 Stellschraube.
30 Fußteil.
31 Schubfläche.
31a Schubfläche.
32 Schubscheibe.
33 Querbohrungft.

34 Gewindeschaft.
35 Führungsrippe.
35a Führungsrippe.
36 Aufnahmebügel.
37 Nocken.
38 Leistengruppe.
39 Distanzstück.
40 Mitnehmerdorn.
41 Niederhaltescheibe.
42 Stellschraube.
43 Kolbenstange.
44 Kupplung.
45 Einspannring.
46 Innenring.
St Stator.
Sp Spulenstrang.
E Einbringwerkzeug.
P Pfeilrichtung.
P Schubkraft.

**Patentansprüche**

1. Spuleneinbringleiste (1), welche in die Statornuten elektrischer Maschinen axial verschiebbar eingesetzt wird und welche zur Aufnahme eines Spulenstranges (Sp) zwei elastisch spreizbare, am Leistenfußteil miteinander verbundene Zungen (2, 3) aus Kunststoff besitzt, die mit Führungslamellen zur Führung der Leiste (1) in der Statornut versehen sind, dadurch gekennzeichnet, daß die Zungen (2, 3) im Spritzdruck- oder Preßverfahren aus einem Elastomer hergestellt und derart geformt sind, daß die Einbringleiste (1) anschließend an den Fußteil einen Bereich aufweist, in dem die Zungen mit Abstand parallel zueinander verlaufen, und daß sie anschließend an diesen Bereich eine Spuleneinführzone (5) mit bei zunehmender Entfernung vom Fußteil zunehmendem Zungenabstand bildet, deren Länge mindestens der Breite des flachliegenden Spulenstranges (Sp) entspricht und deren Spreizwinkel so bemessen ist, daß die Zungenspitzen (12) der in den Stator (St) eingesetzten benachbarten Leisten aneinander liegen.

2. Spuleneinbringleiste nach Anspruch 1, dadurch gekennzeichnet, daß eine (2) ihrer beiden Leistenzungen im Bereich der Spuleneinführzone (5) mit einem seitlich abstehenden Querzapfen (14) versehen ist, und daß die andere Leistenzunge (3) an dieser Stelle eine Aufnahmebohrung (14a) für den Querzapfen der im Stator benachbarten Leistenzunge besitzt.

3. Spuleneinbringleiste nach Ansprüch 1, dadurch gekennzeichnet, daß die beiden Leistenzungen (2, 3) spiegelsymmetrisch geformt sind und am Fußteil (4) durch zerstörungsfrei lösbare, vorzugsweise druckknopfartige Mittel (8) miteinander verbunden sind.

4. Spuleneinbringleiste nach Anspruch 1, dadurch gekennzeichnet, daß der in der Leistenzunge eingebundene Teil der Führungslamelle (15) jeweils schräg durch den Zungenkörper (2, 3) verläuft, derart, daß nur die aus den Zungen herausstehenden Lamellenteile einen gegenseitigen Abstand besitzt, welcher der Nutenöffnungsweite entspricht.

5. Spuleneinbringleiste nach Anspruch 1, dadurch gekennzeichnet, daß die Führungslamellen mit den Leistenzungen durch Klebemittel verbunden sind, wobei der Kleberand der Lamelle jeweils mit der Zungenfläche bündig ist.

6. Spuleneinbringleiste nach Anspruch 1, dadurch gekennzeichnet, daß sie mit weiteren Einbringleisten zusammen einen einstückigen Einbringkörper (19) bildet.

7. Spuleneinbringleiste nach einem der vorhergehenden Ansprüche, dadurch gekennzeichnet, daß der Leistenfuß (4) Strukturen, z.B Ausnehmungen (9) besitzt, die zur formschlüssigen Verbindung mit einem Einbringwerkzeug (E) geeignet sind.

8. Spuleneinbringleiste nach Anspruch 1, dadurch gekennzeichnet, daß der Fußteil (30, 36) der Einbringleiste auf der den Führungslamellen (15) gegenüberliegenden Oberseite mit einer Schubfläche (31, 31a) versehen ist, auf welche beim Einziehen der Spulen die Kraft einer auf dem Zugschaft (21) der Ziehvorrichtung angeordneten Schubscheibe (32) übertragen wird.

9. Spuleneinbringleiste nach Anspruch 8, dadurch gekennzeichnet, daß die Schubfläche (31) schräg zur Schubkraft (p) verläuft, derart, daß beim Einziehvorgang eine Kraftkomponente an der Schubfläche entsteht, welche den Fußteil (30) in die Statornut (13) eindrückt.

10. Spuleneinbringleiste nach Anspruch 8, dadurch gekennzeichnet, daß ein mit der Schubfläche (31a) versehener einstückiger Aufnahmebügel (36) aus Kunststoff vorgesehen ist, welcher auf den Fußteil (4) aufsetzbar ist und diesen umfaßt und in Zugrichtung festhält.

11. Spuleneinbringleiste nach Anspruch 10, dadurch gekennzeichnet, daß der Fußteil (30) bzw. der Aufnahmebügel (36) mit einer Querbohrung (33) versehen ist, welche zur Aufnahme eines Querverbindungsorgans (34) für eine Leistengruppe dient.

12. Spuleneinbringleiste nach Anspruch 10, dadurch gekennzeichnet, daß der Fußteil (30) bzw. der Aufnahmebügel (36) mit einer angeformten Führungsrippe (35, 35a) versehen ist, welche mit den Führungslamellen (15) fluchtet und in die Statornut (13) einschiebbar ist.

**Revendications**

1. Baguette (1) d'introduction de bobinage, laquelle est insérée, de façon axialement déplaçable, dans les gorges de stator de machines électriques et laquelle possède, pour la réception d'un écheveau de bobinage (Sp), deux languettes en matière synthétique (2, 3), élastiquement écartables et reliées l'une à l'autre au pied de la baguette, qui, pour le guidage de la baguette (1) dans la gorge de stator, sont munies de lamelles de guidage, caractérisée en ce que les languettes (2, 3) sont réalisées en un élastomère par le procédé de pressage ou de pression d'injection, et sont conformées de sorte que la baguette d'introduction (1) présente, de façon ajacente au pied, une zone dans laquelle les languettes s'étendent parallèlement l'une à l'autre de façon écartée, et en ce qu'elles forment, de façon adjacente à cette zone, une zone d'introduction de bobinage (5) présentant un écartement des languettes croissant lorsque l'éloignement du pied croît, dont la longueur correspond au moins à la largeur de l'écheveau de bobinage (Sp) se trouvant à plat et dont l'angle d'écartement est choisi de sorte que les bouts (12) des languettes des baguettes voisines insérées dans le stator (St) soient adjacents l'un à l'autre.

2. Baguette d'introduction de bobinage selon la revendication 1, caractérisée en ce qu'une (2) de ses deux languettes est munie, dans la zone (5) d'introduction de bobinage, d'un tourillon transversal (14) s'éloignant latéralement, en ce que l'autre languette (3), à cet endroit, possède un perçage de réception (14a) pour le tourillon transversal de la languette voisine dans le stator.

3. Baguette d'introduction de bobinage selon la revendication 1, caractérisée en ce que les deux languettes (2, 3) sont formées de façon symétrique et sont reliées l'une à l'autre, au pied (4), par des moyens (8), amovibles de façon non destructive et, de préférence, en forme de bouton-pression.

4. Baguette d'introduction de bobinage selon la revendication 1, caractérisée en ce que la partie, intégrée dans la languette, de la lamelle de guidage (15) s'étend, à chaque fois, de façon inclinée à travers le corps de la languette (2, 3), de sorte que seules les parties des lamelles, qui font saillie hors des languettes, possèdent un écartement mutuel qui correspond à la largeur d'ouverture des gorges.

5. Baguette d'introduction de bobinage selon la revendication 1, caractérisée en ce que les lamelles de guidage sont reliées aux languettes par un adhésif, le bord adhésif de la lamelle étant, à chaque fois, à fleur de la surface de la languette.

6. Baguette d'introduction de bobinage selon la revendication 1, caractérisée en ce qu'elle forme, avec d'autres baguettes d'introduction, un corps d'introduction (19) en une pièce.

7. Baguette d'introduction de bobinage selon l'une des revendications précédentes, caractérisée en ce que le pied de la baguette (4) possède des structures, par exemple des évidements (9), qui sont appropriés pour la liaison mécanique à un outil d'introduction (E).

8. Baguette d'introduction selon la revendication 1, caractérisée en ce que le pied (30, 36) de la baguette d'introduction est muni, sur son dessus opposé aux lamelles de guidage (15), d'une surface de poussée (31, 31a), sur laquelle, lors de l'insertion des bobinages, est transmise la force d'un disque de poussée (32) agencé sur l'arbre (21) du dispositif de traction.

9. Baguette d'introduction de bobinage selon la revendication 8, caractérisée en ce que la surface de poussée (31) s'étend de façon inclinée par rapport à la force de poussée (P), de sorte que, lors du processus d'insertion, il se crée une composante de force sur la surface de poussée, laquelle presse le pied (30) dans la gorge (13) du stator.

10. Baguette d'introduction de bobinage selon la revendication 8, caractérisée en ce qu'un étrier de réception en une pièce (36), muni de la surface de poussée (31a) et réalisé en matière synthétique, est prévu, lequel peut être monté sur le pied (4) et entoure celui-ci et le maintient dans la direction de traction.

11. Baguette d'introduction de bobinage selon la revendication 10, caractérisée en ce que le pied (30) ou l'étrier de réception (36) est muni d'un perçage transversal (33), lequel sert pour la réception d'un organe de liaison transversal (34) pour un groupe de baguettes.

12. Baguette d'introduction de bobinage selon la revendication 10, caractérisée en ce que le pied (30) ou l'étrier de réception (36) est muni d'une nervure de guidage conformée (35, 35a), laquelle est alignée avec les lamelles de guidage (15) et peut être insérée dans la gorge (13) du stator.

**Claims**

1. A coil insertion strip (1) which is axially displaceably inserted into the stator grooves of electrical machines and which, to support a bobbin line (Sp), has two elastically openable tongues (2, 3) of synthetic plastics material which are connected to each other at the strip root and which are provided with guide blades for guiding the strip (1) in the stator groove, characterised in that the tongues (2, 3) are produced from an elastomer by an injection moulding or pressure moulding process and are so shaped that the insertion strip (1) has adjacent the root part a portion in which the tongues extend at a distance from and parallel with each other and in that adjacent to this portion they form a bobbin feed-in zone (5) where the tongues are spaced apart by an increasing amount with increasing remoteness from the root part, and the length of which corresponds at least to the width of the laid-flat bobbin line (Sp) and the opening angle of which is so dimensioned that the tips (12) of the tongues rest on each other when adjacent strips are inserted into the stator (St).

2. A coil insertion strip according to Claim 1, characterised in that one (2) of its two strip tongues is in the region of the coil insertion zone (5) provided with a laterally projecting transverse peg (14) and in that the other strip tongue (3) has at this location a receiving bore (14a) to accommodate the transverse head of the strip tongue which is adjacently disposed in the stator.

3. A coil insertion strip according to Claim 1, characterised in that the two strip tongues (2, 3) are shaped in a mirrored symmetrical fashion and are at the root part (4) connected to each other by indestructible and separable means (8) preferably of the press-stud type.

4. A coil insertion strip according to claim 1, characterised in that the part of the guide plate (15) which is bonded into the strip tongue extends in each case obliquely through the tongue body (2, 3) so that only the parts of the blade which project from the tongues are spaced apart from each other by an amount corresponding to the width of the groove opening.

5. A coil insertion strip according to Claim 1, characterised in that the guide plates are connected to the strip tongues by adhesive means, the adhesive edge of the plate being in each case flush with the surface of the tongue.

6. A coil insertion strip according to Claim 1, characterised in that together with further insertion strips it forms one one-piece insertion member (19).

7. A coil insertion strip according to one of the preceding Claims, characterised in that the strip root (4) has structures, e.g. recesses (9), which are suitable for a form-locking connection to an insertion tool (E).

8. A coil insertion strip according to Claim 1, characterised in that the root part (30, 36) of the insertion strip is, on the upper surface opposite the guide plates (15), provided with a thrust surface (31, 31a) to which, as the coils are pulled in, the force of a thrust plate (32) disposed on the traction stem (21) of the pulling device is transmitted.

9. A coil insertion strip according to Claim 8, characterised in that the thrust surface (31) extends obliquely to the thrust force (p) so that during the drawing-in process a force component is created at the thrust surface which presses the root part (30) into the stator groove (13).

10. A coil insertion strip according to Claim 8, characterised in that a curved one-piece support (36) of synthetic plastics material, provided with the thrust surface (31a) is adapted to be fitted onto the root part (4) engaging around it and gripping it in the direction of pull.

11. A coil insertion strip according to Claim 10, characterised in that the root part (30) or the curved supporting member (36) is provided with a transverse bore (33) which serves to accommodate a transverse connecting member (34) for a group of strips.

12. A coil insertion strip according to Claim 10, characterised in that the root part (30) or the curved receiving member (36) is provided with an integrally moulded guide rib (35, 35a) which is in line with the guide plates (15) and can be inserted into the stator groove (13).

EP 0 189 116 B1

FIG. 1

FIG. 2

FIG. 3

FIG. 7

FIG. 8

FIG. 9

1

FIG. 4

FIG. 5

FIG. 6

FIG.11

FIG.10

FIG.12

FIG.13